# EUROPÄISCHE PATENTSCHRIFT

(11) **EP 4 000 483 B1**
(45) Veröffentlichungstag und Bekanntmachung des Hinweises auf die Patenterteilung: **03.05.2023**
(21) Anmeldenummer: 21203437.5
(22) Anmeldetag: 19.10.2021
(51) Int. Cl.: A47J 43/07, A47J 36/32

(54) **KÜCHENMASCHINE MIT LADUNGSSTEUERUNG EINES HILFSGERÄTS**
KITCHEN APPLIANCE WITH LOAD CONTROL OF AN AUXILIARY DEVICE
ROBOT DE CUISINE AVEC CONTRÔLE DE CHARGE D'UN APPAREIL AUXILIAIRE

(30) Priorität: 11.11.2020 DE 102020214196
(43) Veröffentlichungstag der Anmeldung: 25.05.2022
(73) Patentinhaber: Vorwerk & Co. Interholding GmbH, 42270 Wuppertal (DE)
(72) Erfinder: Ludwig, Matthias, 40822 Mettmann (DE); Pieper, Dr. Mirco, 42287 Wuppertal (DE)
(74) Vertreter: Gille Hrabal Partnerschaftsgesellschaft mbB Patentanwälte

(56) Entgegenhaltungen:
- EP-A1- 3 056 882
- DE-A1- 3 045 143
- US-A1- 2017 138 797

## Beschreibung

Die Erfindung betrifft eine Küchenmaschine zum Zubereiten einer Speise in einem Speisenzubereitungsgefäß, ein System aus einer Küchenmaschine und einem batteriebetriebenen Hilfsgerät, ein Verfahren zum Betreiben einer Küchenmaschine sowie ein Computerprogrammprodukt. Die Küchenmaschine dient dem Zubereiten einer Speise in einem Speisenzubereitungsgefäß. Die Küchenmaschine umfasst ein Werkzeug zum Mischen oder Zerkleinern der Speise in dem Speisenzubereitungsgefäß und/oder ein Heizelement zum Erhitzen der Speise in dem Speisenzubereitungsgefäß.

Haushaltsküchenmaschinen wie der Thermomix^{®}, die auf digital gespeicherte Rezepte zur teilautomatisierten Zubereitung einer Speise zugreifen können, sind bekannt. Zur Zubereitung einer Speise arbeitet sich ein Benutzer sukzessive durch die Rezeptschritte in der von dem Rezept vorgegebenen Reihenfolge. Besonders bei hochwertigen Küchenmaschinen erwartet der Benutzer, dass er oder sie mithilfe der Küchenmaschine ein reproduzierbares Kochergebnis von hoher Qualität erzielt.

Eine Küchenmaschine kann gemeinsam mit einem Hilfsgerät wie einem Thermometer, einem Haushaltsrührgerät oder einem Ofen eine Speise zubereiten. Ein Beispiel dafür wird in der nicht vorveröffentlichten europäischen Patentanmeldung mit dem amtlichen Aktenzeichen 20175328.2 beschrieben. Eine entsprechend eingerichtete Küchenmaschine kann mit einem entsprechend eingerichteten Hilfsgerät wie zum Beispiel einem Haushaltsrührgerät im Sinne der vorgenannten europäischen Patentanmeldung datentechnisch verbunden werden, um Informationen des Hilfsgeräts zur Zubereitung der Speise zu nutzen oder um das Hilfsgerät zu steuern. Dokument EP-A-3056882 offenbart eine Küchenmaschine nach dem Oberbegriff des unabhängigen Anspruchs 1 sowie ein System nach dem Oberbegriff des unabhängigen Anspruchs 12.

Es ist Aufgabe der Erfindung, eine weiterentwickelte Küchenmaschine, ein weiterentwickeltes System, ein weiterentwickeltes Verfahren und ein weiterentwickeltes Computerprogrammprodukt bereitzustellen.

Die Aufgabe wird gelöst durch eine Küchenmaschine gemäß Anspruch 1 sowie durch ein System, ein Verfahren und ein Computerprogrammprodukt gemäß den Nebenansprüchen. Vorteilhafte Ausführungsformen sind in den Unteransprüchen angegeben.

Zur Lösung der Aufgabe dient eine Küchenmaschine zum Zubereiten einer Speise in einem Speisenzubereitungsgefäß. Die Küchenmaschine hat ein Werkzeug zum Mischen oder Zerkleinern der Speise in dem Speisenzubereitungsgefäß und/oder ein Heizelement zum Erhitzen der Speise in dem Speisenzubereitungsgefäß. Die Küchenmaschine ist dazu eingerichtet, eine Zustandsinformation bezüglich einer Speisenzubereitung von einem batteriebetriebenen Hilfsgerät zu empfangen und für einen Speisenzubereitungsvorgang zu nutzen. Die Küchenmaschine weist eine Empfangseinheit zum Empfangen eines Ladezustands des batteriebetriebenen Hilfsgeräts und eine Steuerungseinheit zur Verarbeitung des empfangenen Ladezustands auf.

Dies ermöglicht ein reproduzierbares Ergebnis der Speisenzubereitung. Es wurde erkannt, dass der Ladezustand eine wesentliche Stellschraube ist, um den ordnungsgemäßen Ablauf der Speisenzubereitung sicherzustellen. Ein Ausfall eines Hilfsgeräts kann zu einer Beeinträchtigung des Ergebnisses der Speisenzubereitung führen. Aus diesem Grund wird zur Gewährleistung eines reproduzierbaren Ergebnisses der Speisenzubereitung sichergestellt, dass der Ladezustand in den Speisenzubereitungsvorgang einbezogen wird. Insbesondere können auf der Basis des Ladezustands entsprechende Maßnahmen ergriffen werden, um den Speisenzubereitungsvorgang möglichst ungestört fortführen zu können. Derartige Maßnahmen können beispielsweise ein Laden des Hilfsgeräts und/oder eine Veränderung eines geplanten Speisenzubereitungsvorgangs sein.

Ein Prozess zur Zubereitung einer Speise ist ein durch eine Funktionskomponente der Küchenmaschine oder eines weiteren Geräts ausgeführter Vorgang, bei dem eine Speise verarbeitet wird. Beispiele für Prozesse zur Zubereitung einer Speise sind Rühren, Zerkleinern, Erhitzen im Speisenzubereitungsgefäß oder Erhitzen mittels eines weiteren Geräts, beispielsweise eines Ofens, einer Mikrowelle oder eines Grills. Eine Funktionskomponente ist eine technische Einheit, die zum Betrieb eines Geräts und/oder zur Durchführung eines Prozesses elektrisch betrieben werden kann. Insbesondere sind Funktionskomponenten zur Durchführung von Prozessen zur Zubereitung einer Speise gemeint. Die Küchenmaschine umfasst als Funktionskomponenten beispielsweise einen Antrieb des Werkzeugs und/oder das Heizelement. Funktionskomponenten des weiteren Geräts können ebenfalls ein Werkzeug zum Mischen und/oder Zerkleinern einer Speise oder ein Heizelement zum Erhitzen der Speise sein.

Die Küchenmaschine ist zum Durchführen eines Speisenzubereitungsvorgangs durch Mischen, Zerkleinern und/oder Erhitzen der Speise in dem Speisenzubereitungsgefäß eingerichtet. Flüssigkeiten, Getränke, Zutaten von Speisen, unverarbeitete oder teilweise verarbeitete Zutaten oder Mischungen davon werden vom Begriff der Speise im Sinne der Erfindung umfasst.

Ein Speisenzubereitungsvorgang ist ein Vorgang, bei dem eine Speise verarbeitet wird. Ein Speisenzubereitungsvorgang kann das Zubereiten einer Speise in dem Zubereitungsgefäß umfassen. Ein Speisenzubereitungsvorgang kann mit dem Werkzeug und/oder dem Heizelement durchgeführt werden und/oder einzelne Prozesse umfassen. Ein Speisenzubereitungsvorgang kann Prozesse umfassen, die in oder unter Nutzung zumindest eines weiteren Geräts durchgeführt werden. Ein weiteres Gerät meint insbesondere ein externes Gerät wie beispielsweise eine weitere Küchenmaschine, ein Haushaltsrührgerät im Sinne der europäischen Patentanmeldung mit dem amtlichen Aktenzeichen 20175328.2, ein Ofen, eine Mikrowelle oder ein Thermometer. Ein Speisenzubereitungsvorgang kann Prozesse umfassen, die beispielsweise mit einem Ofen oder einem Grill durchgeführt werden. Ein Speisenzubereitungsvorgang kann die Verwendung des Hilfsgeräts umfassen. Ein Speisenzubereitungsvorgang kann die Zubereitung mehrerer Speisen durch die Küchenmaschine und/oder in einem weiteren Gerät umfassen. Zur Durchführung eines Speisenzubereitungsvorgangs können Informationen von Funktionskomponenten der Küchenmaschine und/oder von empfangenen Informationen weiterer Geräte genutzt werden. Ein Speisenzubereitungsvorgang kann Ausgaben für den Benutzer umfassen, beispielsweise Anzeigen und/oder Benachrichtigungen. Beispielsweise kann die optische Anzeige schrittweiser Anweisungen umfasst sein, mittels derer der Benutzer während des Speisenzubereitungsvorgangs Schritt für Schritt durch ein Rezept geführt wird.

Ein Rezept kann sich auf die Zubereitung einer Speise beziehen wie zum Beispiel die Zubereitung einer Suppe. Ein Rezept kann aber auch die Zubereitung mehrerer Speisen umfassen wie zum Beispiel mehrere Speisen für einen Hauptgang. Eine erste Speise eines Hauptgangs kann Risotto sein. Eine zweite Speise eines Hauptgangs kann Salat sein. Ein Rezept kann sich auf die Zubereitung eines Menus beziehen, das eine Mehrzahl von Speisen umfasst wie Vorspeise, Hauptspeise und Nachspeise. Die Vorspeise kann eine Suppe sein. Die Hauptspeise kann Risotto sein. Die Nachspeise kann Zabaione sein.

Das Rezept kann digital gespeichert sein. Umfasst ein Rezept eine Zubereitung von mehreren Speisen, so können digital gespeicherte Rezepte für die mehreren Speisen zu einem Rezept beispielsweise durch eine Steuerungseinheit zusammengefasst werden. Wird das so zusammengefasste Rezept abgearbeitet, so werden also nacheinander Rezeptschritte abgearbeitet. Das Abarbeiten hat zur Folge, dass eine Mehrzahl von Speisen zubereitet werden. Das Rezept kann so zusammengefasst worden sein, dass mehrere Speisen zeitgleich oder zumindest im Wesentlichen zeitgleich fertig gestellt werden.

Die Küchenmaschine kann zum Erhitzen einer Speise in dem Speisenzubereitungsgefäß ein Heizelement umfassen, das beispielsweise am und/oder im Boden des Speisenzubereitungsgefäßes angeordnet ist. Insbesondere ist ein elektrisches Heizelement gemeint. Vorzugsweise dient zum Zerkleinern und/oder Mischen ein drehbares Werkzeug, das insbesondere im Bodenbereich des Speisenzubereitungsgefäßes angeordnet oder anordbar ist. Das Werkzeug und das Heizelement sind elektrisch betreibbare Funktionskomponenten zum Zubereiten einer Speise in dem Speisenzubereitungsgefäß. Das Werkzeug kann reversibel mit einer Welle der Küchenmaschine verbindbar sein. Bevorzugt ist ein Antrieb zum Drehen des Werkzeugs bzw. der Welle in einem Gehäuse der Küchenmaschine angeordnet. Insbesondere ist der Antrieb mit dem Werkzeug über eine Welle verbunden, die sich in abgedichteter Weise durch eine Öffnung im Boden des Speisenzubereitungsgefäßes erstreckt. Bevorzugt hat das Werkzeug zumindest eine Klinge. Das Werkzeug kann sowohl zum Mischen als auch zum Zerkleinern der Speise in dem Speisenzubereitungsgefäß eingerichtet sein.

Eine Zustandsinformation ist eine Information bezüglich eines Zustands einer Speise, eines Teils einer Speise, eines Geräts oder einer Funktionskomponente zur Speisenzubereitung. Die Zustandsinformation betrifft die Speisenzubereitung. Insbesondere ist eine Zustandsinformation gemeint, die während einer Speisenzubereitung ermittelt wird. Die Zustandsinformation kann beispielsweise eine Temperatur, eine Drehzahl, eine Einstellung oder einen Betriebsparameter eines Geräts, insbesondere des Hilfsgeräts, umfassen.

Das Empfangen der Zustandsinformation bezüglich der Speisenzubereitung erfolgt insbesondere ebenfalls mittels der Empfangseinheit der Küchenmaschine. Es kann ein drahtloses Empfangen sein. Empfangen einer Zustandsinformation meint den Erhalt einer Information, die die Zustandsinformation betrifft. Die Küchenmaschine ist dazu eingerichtet, die Zustandsinformation für einen Speisenzubereitungsvorgang zu nutzen. Insbesondere verarbeitet die Steuerungseinheit der Küchenmaschine die Zustandsinformation. Die Zustandsinformation kann ferner angezeigt oder anderweitig ausgegeben werden. Sie kann z. B. als Anzeige des Ladezustands auf einem Display der Küchenmaschine dargestellt werden. Sie kann zur Beeinflussung von Steuerparametern der Speisenzubereitung genutzt werden. Diese Steuerparameter können Prozesse der Küchenmaschine und/oder Prozesse eines weiteren Geräts betreffen.

Das Hilfsgerät dient der Ermittlung und dem Senden von Informationen bezüglich der Zustandsinformation. Beispielsweise ist das Hilfsgerät ein Thermometer, welches als Zustandsinformation eine Temperatur im Inneren einer Speise und/oder im Inneren eines Speisenzubereitungsgefäßes misst und entsprechende Daten drahtlos überträgt. Es ist jedoch nicht ausgeschlossen, dass auch das Hilfsgerät über Funktionskomponenten zur Durchführung eines Prozesses zur Zubereitung einer Speise verfügt.

Das Thermometer umfasst in einer Ausgestaltung zwei Temperatursensoren. Es kann einen Abstand zwischen den beiden Temperatursensoren geben. So kann ein Temperatursensor bei einem spitzen Ende des Thermometers vorhanden sein. Der andere Temperatursensor kann in der Mitte des Thermometers vorhanden sein oder zwischen der Mitte des Thermometers und dem anderen Ende des Thermometers. Wird das spitze Ende des Thermometers in eine Speise hineingestochen, so kann dann die Temperatur in der Speise mit dem einen Temperatursensor gemessen werden und die Temperatur außerhalb der Speise mit dem anderen Temperatursensor, also in der Regel die Temperatur im Speisenzubereitungsgefäß. Es können dadurch verbessert reproduzierbare Kochergebnisse erzielt werden. So können beide gemessene Temperaturen genutzt werden, um das Erhitzen des Speisenzubereitungsgefäßes zu steuern.

Das Hilfsgerät ist ein batteriebetriebenes elektrisches Gerät, das dazu eingerichtet ist, in einem Speisenzubereitungsvorgang mit der Küchenmaschine zusammenzuwirken. Das Hilfsgerät ist insbesondere ein von der Küchenmaschine separates Gerät. Es unterstützt die Küchenmaschine bei der Zubereitung von Speisen. Insbesondere ist es ein entferntes Gerät (englisch: remote device), das datentechnisch mit der Küchenmaschine verbunden werden kann. Das Hilfsgerät ist insbesondere so dimensioniert, dass es während einer in einem Ofen erfolgenden Speisenzubereitung in dem Ofen und insbesondere zumindest teilweise in der Speise angeordnet werden kann. Es kann ein Ofenthermometer sein. Das Hilfsgerät kann ferner so dimensioniert sein, dass es im Speisenzubereitungsgefäß der Küchenmaschine angeordnet werden kann, um die Zubereitung einer Speise in dem Speisenzubereitungsgefäß zu überwachen. Dabei ist es nicht ausgeschlossen, dass das Hilfsgerät teilweise aus einer Öffnung des Speisenzubereitungsgefäßes und gegebenenfalls aus einer Deckelöffnung eines Deckels des Speisenzubereitungsgefäßes herausragt.

Ein batteriebetriebenes Gerät ist ein Gerät, welches für zumindest eine Funktion einen elektrischen Strom und/oder eine elektrische Spannung benötigt und welches zumindest eine Batterie zur Versorgung mit dem Strom und/oder der Spannung aufweist. Insbesondere wird die Batterie zur Erfassung von Daten bezüglich der Zustandsinformation und/oder zur Übertragung dieser Daten benötigt. Der Ladezustand des batteriebetriebenen Hilfsgeräts meint den Ladezustand der Batterie des Hilfsgeräts. Entsprechend meint ein Laden des Hilfsgeräts das Laden der Batterie des Hilfsgeräts. Batterien im Sinne der Erfindung sind insbesondere wiederaufladbare Batterien. Nicht wiederaufladbare Batterien sind jedoch auch nicht ausgeschlossen.

Ein Ladezustand (englisch: charge state) ist eine Angabe über die vorhandene Ladung einer Batterie, beispielsweise als relativer Anteil an einer gesamten Ladekapazität oder als Absolutwert. Das Empfangen eines Ladezustands meint typischerweise ein Empfangen von Daten, die eine Information bezüglich des Ladezustands enthalten. Mit anderen Worten dient die Empfangseinheit zum Empfangen von Informationen bezüglich des Ladezustands. Die Empfangseinheit kann eine analoge oder eine digitale Empfangseinheit sein. Der Ladezustand kann eine Information über einen verbleibenden oder verbrauchten Anteil der Batteriekapazität oder über einen verbleibenden oder verbrauchten Absolutwert der Batteriekapazität des Hilfsgeräts sein.

Insbesondere werden die einzelnen Prozesse zur Speisenzubereitung oder der Speisenzubereitungsvorgang mittels der Steuerungseinheit gesteuert. Dabei kann die empfangene Zustandsinformation bezüglich des Speisenzubereitungsvorgangs von dem Hilfsgerät genutzt werden. Die Steuerungseinheit kann dazu eingerichtet sein, Prozesse weiterer Geräte steuern. Die Steuerungseinheit kann dazu eingerichtet sein, Betriebsparameter einzelner Funktionskomponenten einzustellen. Insbesondere ist die Küchenmaschine dazu eingerichtet, Betriebsparameter unter Berücksichtigung der von dem Hilfsgerät empfangenen Zustandsinformation bezüglich der Speisenzubereitung einzustellen. Mit anderen Worten kann das Hilfsgerät Informationen bereitstellen, die den Speisenzubereitungsvorgang beeinflussen. Beispielsweise kann die Küchenmaschine dazu eingerichtet sein, aufgrund der gemessenen Temperatur im Inneren einer Speise die Zeitdauer zu ermitteln, die bis zur Beendigung des Garprozesses noch benötigt wird.

In einer Ausgestaltung ist die Steuerungseinheit dazu eingerichtet, unter Berücksichtigung des empfangenen Ladezustands eine verbleibende Nutzungsdauer des Hilfsgeräts zu ermitteln.

Eine verbleibende Nutzungsdauer des Hilfsgeräts ist eine Nutzungsdauer, die mit einem aktuellen Ladezustand des Hilfsgeräts noch möglich ist. Insbesondere ist eine konkrete Zeitangabe gemeint. Es ist möglich, dass die verbleibende Nutzungsdauer im Sinne der Erfindung gegenüber der rechnerisch verbleibenden Nutzungsdauer um einen absoluten Wert oder einen relativen Anteil verringert ist, um etwaige Messungenauigkeiten zu berücksichtigen und einen Sicherheitsbereich vorzuhalten.

Diese Ausgestaltung ermöglicht, dass relevante Informationen zur Nutzung des Hilfsgeräts zur Verfügung stehen, um - falls notwendig - den Speisenzubereitungsvorgang entsprechend anzupassen. Somit kann ein Ausfall des Hilfsgeräts verhindert werden und die Reproduzierbarkeit der Speisenzubereitung wird weiter erhöht. Insbesondere ist die Küchenmaschine dazu eingerichtet, die verbleibende Nutzungsdauer an einen Benutzer auszugeben. Dies kann insbesondere mit einer Ausgabeeinheit der Küchenmaschine erfolgen.

In einer Ausgestaltung ist die Küchenmaschine dazu eingerichtet, auf der Basis von Rezeptschritten eines Rezepts zumindest einen Betriebsparameter des Werkzeugs und/oder des Heizelements einzustellen. Alternativ oder ergänzend ist die Küchenmaschine dazu eingerichtet, auf der Basis von Rezeptschritten eines Rezepts zumindest eine Information für einen Benutzer auszugeben.

Mit anderen Worten kann die Steuerungseinheit auf ein Rezept zugreifen und durch einen Rezeptschritt des Rezeptes veranlasst werden, eine der Funktionskomponenten in einer durch den Rezeptschritt definierten Weise zu betreiben. Vorzugsweise umfasst ein Rezept mehrere Rezeptschritte. Einige dieser Rezeptschritte beinhalten insbesondere einen Prozess wie Erhitzen, Zerkleinern und/oder Mischen einer Speise.

Ein Rezept ist ein Datensatz, der mehrere Rezeptschritte definiert. Rezeptschritte enthalten einen oder mehrere Steuerparameter für eine oder mehrere Funktionskomponenten der Küchenmaschine und/oder zumindest eines weiteren Geräts. Ein Rezeptschritt enthält insbesondere Informationen darüber, für welche Dauer welche Funktionskomponente in welcher Weise zu betreiben ist. In einem Rezeptschritt enthaltene Steuerparameter können dabei beispielsweise die Temperatur, die Drehzahl, eine Zeitdauer einer Verarbeitung, eine Start- oder Endzeit oder eine Start- oder Endbedingung eines Prozesses zur Speisenzubereitung sein. Insbesondere ist die eine Steuerungseinheit dazu eingerichtet, Betriebsparameter der Funktionskomponenten anhand der in den Rezeptschritten des Rezepts hinterlegten Steuerparameter einzustellen. In einem Rezeptschritt kann vorgesehen sein, dass eine Kombination mehrerer Prozesse ausgeführt wird. So können beispielsweise Rühren und Erhitzen im Speisenzubereitungsgefäß gleichzeitig erfolgen. Auch können mehrere Prozesse in unterschiedlichen Geräten zeitgleich erfolgen.

Insbesondere ist die Steuerungseinheit dazu eingerichtet, Betriebsparameter zu ermitteln und bereitzustellen und/oder die Ausgabe der Information zu initiieren. Eine auszugebende Information kann ein Signal, einen Alarm, eine Anweisung und/oder eine inhaltliche Angabe bezüglich eines Speisenzubereitungsvorgangs enthalten. Eine Information kann an eines der für die Zubereitung einer Speise eingesetzten Geräte ausgegeben werden, also zum Beispiel an das Hilfsgerät. Das Gerät kann ein Display umfassen, auf dem die Information dann zum Beispiel anzeigt werden kann. Eine Ausgabe einer Information kann beispielsweise alternativ oder ergänzend durch ein Mobiltelefon ermöglicht werden, auf dem ein dafür geeignetes Programm, also eine "App", installiert worden ist. Zumindest eines der eingesetzten Geräte wie zum Beispiel das Hilfsgerät kann einen Status des Hilfsgeräts anzeigen. Eine Statusanzeige kann beispielsweise über das genannte Mobiltelefon erfolgen. Die Statusanzeige kann den Ladezustand der Batterie des Hilfsgeräts umfassen. Die Statusanzeige kann beispielsweise die maximal noch mögliche Betriebsdauer des Hilfsgeräts umfassen, bevor für eine Fortsetzung des Betriebs die Batterie des Hilfsgeräts wieder aufgeladen werden muss.

Die Küchenmaschine kann eine Ausgabeeinheit aufweisen. Die Ausgabeeinheit kann zur optischen Ausgabe von Informationen in für den Benutzer interpretierbarer Form eingerichtet sein, beispielsweise zur Ausgabe von Anweisungen zur Bearbeitung von Rezeptschritten. Alternativ oder ergänzend kann die Küchenmaschine eine Ausgabeeinheit zur akustischen Ausgabe von Informationen wie beispielsweise von Alarmsignalen und/oder Benachrichtigungstönen aufweisen. Die Ausgabe von Informationen erfolgt typischerweise mittels der Ausgabeeinheit.

Auf der Basis von Rezeptschritten auszugebende Informationen betreffen insbesondere die Abarbeitung der Rezeptschritte. Beispielsweise ist die Ausgabeeinheit dazu eingerichtet, dem Benutzer Anweisungen zum manuellen Ausführen eines Schrittes oder Teilschrittes eines Rezeptes anzuzeigen. Beispielsweise das Hinzufügen einer Zutat in das Speisenzubereitungsgefäß ist eine solche Anweisung. Das Hinzufügen kann entweder automatisch z. B. mithilfe einer integrierten Waage erkannt oder durch den Benutzer bestätigt werden, beispielsweise mittels einer Eingabeeinheit. Diese Ausgestaltung ermöglicht ein besonders reproduzierbares Ergebnis der Speisenzubereitung, da die Vorgabe der durchzuführenden Tätigkeiten individuelle Einflüsse verringert.

In einer Ausgestaltung ist die Steuerungseinheit dazu eingerichtet zu ermitteln, ob das Rezept mit dem Ladezustand des Hilfsgeräts vollständig abgearbeitet werden kann.

Die Steuerungseinheit ermittelt, ob das Rezept, das einem aktuellen Speisenzubereitungsvorgang zu Grunde liegt, vollständig abgearbeitet werden kann. Es wird also bestimmt, ob der aktuelle Speisenzubereitungsvorgang ohne Änderungen bzw. wie geplant fertiggestellt werden kann. Insbesondere ist die Küchenmaschine dazu eingerichtet, eine dem Ergebnis der Ermittlung entsprechende Information an den Benutzer auszugeben. Typischerweise ergibt die Ermittlung, ob das Rezept mit dem Ladezustand vollständig abgearbeitet werden kann, dass das Rezept mit dem Ladezustand vollständig abgearbeitet werden kann (positive Entscheidung), oder dass das Rezept mit dem Ladezustand nicht vollständig abgearbeitet werden kann (negative Entscheidung).

In einer Ausführungsform kann die Steuerungseinheit darüber hinaus einen Risikobereich berücksichtigen, bei dem rechnerisch zwar eine positive Entscheidung ermittelt wird, diese aber nahe an der Grenze zur negativen Entscheidung liegt. In diesem Fall ist die Steuerungseinheit dazu eingerichtet, als Ergebnis der Ermittlung, ob das Rezept mit dem Ladezustand vollständig abgearbeitet werden kann, entweder ebenfalls eine negative Entscheidung zu fällen oder ein drittes Ergebnis zu ermitteln, nach welchem die vollständige Abarbeitung des Rezepts kritisch ist (Risikoentscheidung). Insbesondere ist die Steuerungseinheit dazu eingerichtet, im Falle einer negativen Entscheidung oder einer Risikoentscheidung zu ermitteln, dass eine vollständige Abarbeitung des Rezepts mit dem Ladezustand des Hilfsgeräts nicht gewährleistet werden kann. Auf diese Weise werden alle Fälle berücksichtigt, in denen eine vollständige Abarbeitung des Rezepts mit dem Ladezustand nicht möglich oder kritisch ist, also nicht gewährleistet werden kann. Dies erhöht weiterhin die Reproduzierbarkeit des Ergebnisses, da mögliche Messfehler, Ungenauigkeiten der Vorhersage, Abweichungen vom geplanten Ablauf der Rezeptschritte, Abweichung in Menge und/oder Beschaffenheit zuzubereitender Speisen und Ähnliches berücksichtigt werden.

In einer Ausführungsform ist die Küchenmaschine dazu eingerichtet, während des Betriebs des Hilfsgeräts und/oder in einem Standby-Modus bzw. Energiesparmodus des Hilfsgeräts zu ermitteln, ob das Rezept vollständig abgearbeitet werden kann. In einer Ausführungsform ist die Küchenmaschine dazu eingerichtet, während des Ladens des Hilfsgeräts zu ermitteln, ob das Rezept vollständig abgearbeitet werden kann.

Insbesondere ist die Küchenmaschine dazu eingerichtet, vor oder zu Beginn eines Speisenzubereitungsvorgangs durch die Küchenmaschine und ggf. das Hilfsgerät zu ermitteln, ob das Rezept mit dem Ladezustand des Hilfsgeräts vollständig abgearbeitet werden kann. Auf diese Weise kann ein geplanter Speisenzubereitungsvorgang im Voraus geplant werden, was die Benutzerfreundlichkeit erhöht. In einer Ausführungsform ist die Küchenmaschine dazu eingerichtet, während des Speisenzubereitungsvorgangs und/oder nach Abschluss eines Rezeptschrittes (erneut) zu ermitteln, ob das Rezept mit dem Ladezustand des Hilfsgeräts vollständig abgearbeitet werden kann. Auf diese Weise kann etwaigen Maßnahmen eine aktuellere Information zugrunde gelegt werden. Abweichungen der zu unterschiedlichen Zeitpunkten durchgeführten Ermittlungen können auf diese Weise ausgeglichen werden.

In einer weiteren Ausgestaltung ist die Steuerungseinheit dazu eingerichtet, zur Ermittlung, ob das Rezept mit dem Ladezustand des Hilfsgeräts vollständig abgearbeitet werden kann, einen oder mehrere der folgenden Schritte auszuführen: Die Steuerungseinheit kann eine verbleibende Nutzungsdauer des Hilfsgeräts unter Berücksichtigung des empfangenen Ladezustands ermitteln. Alternativ oder ergänzend kann die Steuerungseinheit eine erwartete Nutzungsdauer des Hilfsgeräts ermitteln. Dabei berücksichtigt die Steuerungseinheit das digitale Rezept, beispielsweise zumindest einen Rezeptschritt und insbesondere mehrere oder alle noch abzuarbeitende Rezeptschritte. Alternativ oder ergänzend kann die Steuerungseinheit eine verbleibende Nutzungsdauer des Hilfsgeräts mit einer erwarteten Nutzungsdauer des Hilfsgeräts vergleichen.

Eine erwartete Nutzungsdauer ist eine Nutzungsdauer des Hilfsgeräts, die zur vollständigen Zubereitung der Speise benötigt wird. In einer Ausführungsform wird zur Ermittlung der erwarteten Nutzungsdauer des Hilfsgeräts zumindest ein Rezeptschritt des Rezepts berücksichtigt. Insbesondere wird eine erwartete Dauer des Rezeptschritts oder der Rezeptschritte berücksichtigt. In einer Ausführungsform können dabei nur oder hauptsächlich die Rezeptschritte berücksichtigt werden, bei denen das Hilfsgerät benötigt wird.

Beispielsweise wird eine Information bezüglich der Dauer eines zukünftigen Rezeptschrittes berücksichtigt, in dem die Speise unter Verwendung des Hilfsgeräts gegart wird, um die benötigte Betriebsdauer des Hilfsgeräts zu ermitteln. Ebenso können mehrere oder alle noch abzuarbeitenden Rezeptschritten des Rezepts berücksichtigt werden, das dem aktuellen Speisenzubereitungsvorgang zu Grunde liegt. Beispielsweise kann berücksichtigt werden, dass ein Hilfsgerät, nämlich ein externes Thermometer, bei einigen folgenden Rezeptschritten nicht benötigt wird und somit in einem Energiesparmodus verbleiben kann, wodurch sein Ladezustand während dieser Rezeptschritte nicht oder nur geringfügig verringert wird.

Dies ermöglicht eine besonders genaue Ermittlung der erwarteten Nutzungsdauer des Hilfsgeräts. Das Ergreifen von Maßnahmen wird somit auf diejenigen Fälle beschränkt, in denen es unbedingt notwendig ist. Dies ermöglicht insgesamt ein reproduzierbares Kochergebnis bei einer besonders hohen Benutzerfreundlichkeit.

Der Vergleich der verbleibenden Nutzungsdauer des Hilfsgeräts mit der erwarteten Nutzungsdauer des Hilfsgeräts umfasst beispielsweise einen Vergleich konkreter Zeitdauern in Minuten. Ist die erwartete Nutzungsdauer größer als die verbleibende Nutzungsdauer, kann das Rezept mit dem Ladezustand des Hilfsgeräts nicht mehr vollständig abgearbeitet werden.

Diese Ausgestaltung weist einen geringen technischen Aufwand auf und ist besonders vorteilhaft bei einem Hilfsgerät, dessen Energiebedarf über die Zeit zumindest zeitweilig im Wesentlichen konstant ist, beispielsweise bei einem Thermometer.

In einer Ausführungsform ist die Steuerungseinheit dazu eingerichtet, zur Ermittlung, ob das Rezept mit dem Ladezustand des Hilfsgeräts vollständig abgearbeitet werden kann, einen oder mehrere der folgenden Schritte auszuführen: Die Steuerungseinheit kann einen für die Abarbeitung des Rezepts benötigten Ladezustand des Hilfsgeräts ermitteln. Dabei kann sie zumindest einen Rezeptschritt des Rezepts, insbesondere mehrere und beispielsweise alle noch abzuarbeitende Rezeptschritte, berücksichtigen. Alternativ oder ergänzend kann die Steuerungseinheit ermitteln, ob das Rezept vollständig abgearbeitet werden kann und/oder ob eine vollständige Abarbeitung des Rezepts gewährleistet werden kann. Dabei kann sie den empfangenen Ladezustand des Hilfsgeräts und den benötigten Ladezustand des Hilfsgeräts berücksichtigen. Mit anderen Worten erfolgt die Ermittlung hierbei nicht auf der Grundlage der erwarteten und verbleibenden Nutzungsdauern, also Zeiten, sondern auf der Grundlage von benötigten und tatsächlichen Ladezuständen. Ebenso können vorhandene und benötigte Energiemengen zugrunde gelegt werden. Dies ist besonders vorteilhaft bei einem Hilfsgerät, dessen Energiebedarf über die Zeit veränderlich ist.

In einer Ausgestaltung ist die Küchenmaschine dazu eingerichtet, eine Information für einen Benutzer auszugeben, wenn eine vollständige Abarbeitung des Rezepts mit dem Ladezustand des Hilfsgeräts nicht möglich ist oder nicht gewährleistet werden kann. Wie oben beschrieben umfasst der Fall, dass die vollständige Abarbeitung nicht gewährleistet werden kann insbesondere alle Fälle, in denen die vollständige Abarbeitung nicht möglich oder kritisch ist. Auf diese Weise kann der Nutzer selbst Maßnahmen ergreifen, um den Speisenzubereitungsvorgang fortzuführen, beispielsweise das Hilfsgerät laden. Dies erhöht die Reproduzierbarkeit des Ergebnisses.

Insbesondere enthält die Information für den Benutzer einen Hinweis, dass das Hilfsgerät geladen werden muss. Sie kann eine Information darüber enthalten, wie lange geladen werden muss, damit anschließend das Rezept zubereitet werden kann. Die Steuerungseinheit kann demnach dazu eingerichtet sein, diese Information zu ermitteln. Eine solche Ausgabe erfolgt insbesondere nach einer Nutzung des Hilfsgeräts und/oder mit einem zeitlichen Abstand vor einer geplanten Nutzung des Hilfsgeräts. Beispielsweise kann eine Aufforderung ausgegeben werden, dass das Hilfsgerät zum Laden mit einer Stromquelle verbunden werden soll, ggf. durch Bringen des Hilfsgeräts in eine Ladeposition, beispielsweise in einer Ladestation. Verbinden mit einer Stromquelle umfasst alle technisch verfügbaren Möglichkeiten zum Laden der Batterie inklusive kabelloses Laden. Alternativ kann die Information den Hinweis enthalten, dass die Batterie des Hilfsgeräts auszutauschen ist.

In einer Ausführungsform ist die Küchenmaschine dazu eingerichtet, während eines Ladevorgangs zu ermitteln, ob der Ladezustand für einen bestimmten Rezeptschritt oder für mehrere bestimmte Rezeptschritte ausreicht. Wird während des Ladens ermittelt, z. B. aufgrund einer Änderung im geplanten Ablauf der Rezeptschritte, dass doch ein höherer Ladezustand benötigt wird als zunächst vorgesehen, kann eine entsprechende Information während des Ladens ausgegeben werden. Wird während des Ladens ermittelt, dass die Zeit bis zum Beginn der geplanten Nutzung des Hilfsgeräts für das Erreichen eines ausreichenden Ladezustands nicht ausreicht, kann die geplante Nutzung, beispielsweise der betreffende Rezeptschritt, um die zeitliche Differenz, ggf. zuzüglich einem Puffer, verschoben werden. Sobald der Ladezustand ausreicht, kann eine entsprechende Ausgabe an einen Benutzer erfolgen. Alternativ oder ergänzend kann automatisch der Rezeptschritt gewechselt werden. Insbesondere wird nach jeder Änderung des Rezepts erneut ermittelt, ob das Rezept mit dem Ladezustand des Hilfsgeräts vollständig abgearbeitet werden kann.

In einer Ausgestaltung ist die Küchenmaschine dazu eingerichtet, ein verändertes oder alternatives Rezept vorzuschlagen, wenn eine vollständige Abarbeitung des Rezepts mit dem Ladezustand des Hilfsgeräts nicht möglich ist oder nicht gewährleistet werden kann. Insbesondere kann die Küchenmaschine, typischerweise die Steuerungseinheit, auf eine Vielzahl an Rezepten zugreifen und auf der Basis des Ladezustands ein geeignetes Rezept auswählen. Somit kann der Benutzer aktiv angeleitet werden, ein Rezept auszuwählen, das mit reproduzierbarem Ergebnis zubereitet werden kann. Ein verändertes Rezept ist insbesondere dahingehend verändert, dass die für die Zubereitung benötigte Zeit verkürzt ist. Die Verkürzung kann auf Prozesse beschränkt sein, die die Nutzung des Hilfsgeräts voraussetzen.

In einer weiteren Ausgestaltung ist die Küchenmaschine dazu eingerichtet, eine Startzeit eines zukünftigen Prozesses zur Zubereitung einer Speise zu verändern, wenn ermittelt wird, dass eine vollständige Abarbeitung des Rezepts mit dem Ladezustand des Hilfsgeräts nicht möglich ist oder nicht gewährleistet werden kann. Insbesondere ist ein zukünftiger Prozess des aktuellen Rezepts gemeint. Die Veränderung meint beispielsweise eine Veränderung gegenüber einer im Rezept vorgegebenen, vorzugsweise unmittelbaren, Abfolge der Rezeptschritte.

Der Ladezustand des Hilfsgeräts ist insbesondere der empfangene Ladezustand, also der aktuelle Ladezustand des Hilfsgeräts. Typischerweise wird die Startzeit hinausgezögert, so dass ausreichend Zeit zum Laden des Hilfsgeräts besteht. Die Veränderung der Startzeit kann dadurch erfolgen, dass dem Benutzer zu einem veränderten Zeitpunkt Anweisungen zur Durchführung eines Prozesses bzw. eines folgenden Rezeptschrittes gegeben werden. In einer Ausführungsform kann die Ausführung zumindest eines folgenden Rezeptschrittes verschoben werden. In einer Ausführungsform kann eine Reihenfolge zumindest zweier folgender Rezeptschritte verändert werden.

Insbesondere ist die Küchenmaschine dazu eingerichtet, eine Zeitdauer zu ermitteln, die benötigt wird, um den Ladezustand des Hilfsgeräts so zu erhöhen, dass eine vollständige Abarbeitung des Rezepts gewährleistet werden kann. Insbesondere ist die Küchenmaschine dazu eingerichtet, die ermittelte Zeitdauer zur Veränderung der Startzeit des zukünftigen Prozesses zu nutzen.

Gemäß dieser Ausgestaltung kann die Steuerungseinheit beispielsweise ermitteln, dass ein achtminütiger Ladevorgang einen ausreichenden Ladezustand des Thermometers für einen folgenden Garprozess ermöglicht. Bei dem Garprozess soll mit einem externen Thermometer die Temperatur im Inneren einer Speise überwacht werden. In diesem Fall kann die Küchenmaschine den Garprozess um acht Minuten verschieben, sodass in der Zwischenzeit ein ausreichender Ladezustand des Thermometers erreicht werden kann.

Insbesondere erfolgt die Ermittlung, ob eine vollständige Abarbeitung des Rezepts mit dem Ladezustand des Hilfsgeräts gewährleistet werden kann, vor oder während des Speisenzubereitungsvorgangs. Insbesondere ist die Steuerungseinheit dazu eingerichtet, die benötigte Zeitdauer zu ermitteln und/oder die Startzeit zu verändern. Diese Ausgestaltung ermöglicht, dass ein Speisenzubereitungsvorgang automatisch angepasst werden kann, wenn ein Ladezustand nicht ausreicht. Auch in diesem Fall wird somit eine reproduzierbare Speisenzubereitung ermöglicht.

In einer weiteren Ausgestaltung ist die Küchenmaschine dazu eingerichtet, einen Schnellademodus des Hilfsgeräts zu initiieren, wenn ermittelt wird, dass eine vollständige Abarbeitung des Rezepts mit dem Ladezustand des Hilfsgeräts nicht möglich ist oder nicht gewährleistet werden kann.

Es kann eine Anweisung an den Benutzer ausgegeben werden, dass das Hilfsgerät zum Laden mit einer Stromquelle verbunden werden soll, sodass die Batterie des Hilfsgeräts kabelgebunden oder kabellos geladen werden kann. Insbesondere wird zum Initiieren des Schnelllademodus ein entsprechender Befehl an das Hilfsgerät und/oder eine Ladestation des Hilfsgeräts gesendet, sodass das Hilfsgerät als Reaktion auf den Befehl schnell geladen wird. Die Küchenmaschine kann eine Sendeeinheit aufweisen, mit der ein entsprechender Befehl gesendet werden kann.

Wird der Schnelllademodus für die ermittelte benötigte Zeitdauer ausgeführt, kann nach dem Ende der ermittelten Zeitdauer ein Befehl zum Beenden des Schnelllademodus und/oder des Ladens an das Hilfsgerät und/oder die Ladestation des Hilfsgeräts gesendet werden. Ebenso ist es möglich, dass die Küchenmaschine nach Beginn des Ladens, insbesondere während des Ladens, erneut einen Ladezustand empfängt und diesen mit dem benötigten Ladezustand abgleicht. Eine derartige Aktualisierung kann in regelmäßigen Zeitintervallen ausgeführt werden. Dieses Vorgehen ist selbstverständlich auch in einem normalen Lademodus möglich. Sobald der benötigte Ladezustand erreicht ist, kann eine entsprechende Information einen Benutzer ausgegeben werden. Auf diese Weise kann unmittelbar nach Erreichen des benötigten Ladezustands die Ausführung des Speisenzubereitungsvorgangs fortgesetzt werden.

Insbesondere ist die Küchenmaschine dazu eingerichtet, eine Zeitdauer zu ermitteln, die benötigt wird, um den Ladezustand des Hilfsgeräts so zu erhöhen, dass eine vollständige Abarbeitung des Rezepts gewährleistet werden kann. Auf diese Weise ist es möglich, dass der Schnelllademodus für die ermittelte Zeitdauer ausgeführt wird. Vor Beginn des Ladevorgangs kann eine Ausgabe an den Benutzer erfolgen, dass für eine bestimmte Zeitdauer geladen werden muss. Der Benutzer kann somit über die konkrete Zeitdauer in Kenntnis gesetzt werden.

Diese Ausgestaltung ermöglicht, dass das Hilfsgerät zum Zeitpunkt seines Einsatzes einen für den Einsatz ausreichenden Ladezustand aufweist. Auf diese Weise wird ein Ausfall verhindert und somit ein besonders reproduzierbares Ergebnis der Speisenzubereitung gewährleistet.

Insbesondere umfasst die Küchenmaschine eine mit der Steuerungseinheit gekoppelte Sendeeinheit, über die die an den Benutzer auszugebenden Informationen an ein tragbares Gerät wie beispielsweise ein Smartphone gesendet werden können. Dies kann alternativ oder ergänzend zu einer Ausgabe mittels einer Ausgabeeinheit der Küchenmaschine erfolgen.

In einer weiteren Ausgestaltung ist die Küchenmaschine dazu eingerichtet, eine Abarbeitung von Rezeptschritten auf der Grundlage des Rezepts und/oder der empfangenen Information zu beeinflussen. Beispielsweise kann die Küchenmaschine dazu eingerichtet sein, einen Betrieb des Werkzeugs und/oder des Heizelements auf der Grundlage des Rezepts und/oder der empfangenen Information zu beeinflussen.

In einer Ausgestaltung ist die Küchenmaschine dazu eingerichtet, einen Betrieb oder ein Laden des Hilfsgeräts auf der Grundlage des Rezepts und/oder der empfangenen Information zu beeinflussen. Insbesondere erfolgt die Beeinflussung des Betriebs derart, dass die Küchenmaschine einen entsprechenden Befehl an das Hilfsgerät bzw. das weitere Gerät sendet. Zu diesem Zweck weist sie insbesondere eine Sendeeinheit auf. Beispielsweise kann die Küchenmaschine dazu eingerichtet sein, das Hilfsgerät in einen Energiesparbetrieb zu überführen, wenn es in einem oder mehreren folgenden Rezeptschritten nicht benötigt wird. Die Küchenmaschine kann dazu eingerichtet sein, das Hilfsgerät in einen Normalbetrieb zu überführen, wenn es in einem oder mehreren folgenden Rezeptschritten benötigt wird. Der Normalbetrieb kann das kontinuierliche oder regelmäßige Erfassen und/oder Übertragen von Daten bezüglich der Zustandsinformation umfassen.

In einer Ausführungsform ist die Küchenmaschine dazu eingerichtet, einen Betrieb des Hilfsgeräts oder eines weiteren Geräts auf der Grundlage des Rezepts und/oder der empfangenen Information zu beeinflussen.

Insbesondere ist die Küchenmaschine dazu eingerichtet, den Betrieb des Hilfsgeräts in Abhängigkeit des Rezepts zu beeinflussen. Beispielsweise kann zu Beginn eines Garprozesses ein Betriebszustand des Hilfsgeräts aktiviert werden, sodass das Hilfsgerät Zustandsinformationen aufnimmt und sendet. Nach Beendigung des Garprozesses kann z. B. ein Standby-Modus aktiviert werden. Ebenso ist es möglich, dass durch entsprechende Befehle an das Hilfsgerät und/oder eine Ladestation des Hilfsgeräts ein Normal- oder Schnelllademodus aktiviert oder deaktiviert wird.

Insbesondere ist die Küchenmaschine dazu eingerichtet, den Betrieb zumindest eines weiteren Geräts in Abhängigkeit des Rezepts zu beeinflussen. So kann die Küchenmaschine vor Beginn eines Prozesses geeignete Befehle geben. Beispielsweise kann ein Garprozesses in einem verbundenen Ofen ausgeführt werden und die Küchenmaschine kann zu geeigneter Zeit vorher einen Befehl zum Vorheizen des Ofens geben. Alternativ oder ergänzend können auf diese Weise vor und/oder während des Prozesses Änderungen von Betriebsparametern vorgenommen werden.

Der Betrieb von weiteren Geräten kann auf der Grundlage der empfangenen Information beeinflusst werden. Beispielsweise können folgende Rezeptschritte verschoben und/oder in ihrer Reihenfolge verändert werden. Ebenso kann die Zuordnung eines Prozesses zu einem bestimmten Gerät verändert werden. Beispielsweise kann eine Sauce statt im Ofen im Speisenzubereitungsgefäß der Küchenmaschine warmgehalten werden, wenn der Ofen für einen zeitlich verschobenen Garprozess benötigt wird.

Insbesondere kann die Küchenmaschine eine Sendeeinheit zum Senden von Befehlen zur Steuerung eines Prozesses an das Hilfsgerät und/oder das weitere Gerät umfassen. Das Senden von Befehlen zur Steuerung eines Prozesses meint insbesondere das Senden von Steuerparametern und/oder Betriebsparametern, beispielsweise basierend auf einem Rezept, auf welches die Küchenmaschine Zugriff hat. Das Hilfsgerät und/oder das weitere Gerät weist dann insbesondere eine entsprechende Empfangseinrichtung zum Empfangen der Befehle und/oder eine Steuerungseinheit zur Umsetzung der Befehle, also beispielsweise zum Übermitteln entsprechender Betriebsparameter an zumindest eine Funktionskomponente des Hilfsgeräts und/oder des weiteren Geräts, auf. Beispielsweise kann das weitere Gerät eine weitere Küchenmaschine sein und die Informationen können solche bezüglich eines Speisenzubereitungsvorgangs der Küchenmaschine sein. Hierbei kann das weitere Gerät etwa ein Werkzeug zum Mischen und/oder Zerkleinern einer Speise in einem Speisenzubereitungsgefäß und/oder ein Heizelement zum Erhitzen einer Speise in dem Speisenzubereitungsgefäß aufweisen. Insbesondere ist die Küchenmaschine dazu eingerichtet, den Betrieb des Hilfsgeräts und/oder des weiteren Gerätes zu überwachen und/oder zu steuern.

In einer weiteren Ausgestaltung ist die Küchenmaschine dazu eingerichtet, eine Information darüber auszugeben, wie oft ein bestimmtes Rezept mit dem empfangenen Ladezustand noch ausgeführt werden kann. Insbesondere ist die Küchenmaschine dazu eingerichtet auf eine Vielzahl digitaler Rezepte zuzugreifen und zu mehreren Rezepten, insbesondere zu jedem der Rezepte, eine Information darüber auszugeben, wie oft das jeweilige Rezept mit dem empfangenen Ladezustand noch ausgeführt werden kann. Die Küchenmaschine kann so eingerichtet sein, dass der Benutzer über eine Eingabeeinheit ein Rezept bestimmen kann und die Informationen über dieses Rezept mit der Ausgabeeinheit ausgegeben wird.

In einer Ausführungsform ist die Küchenmaschine dazu eingerichtet, ein oder mehrere Rezepte vorzuschlagen, die mit dem empfangenen Ladezustand noch ausgeführt werden können. Es werden also ein oder mehrere Rezepte vorgeschlagen, bei denen gewährleistet ist, dass die zugehörigen ein oder mehreren Speisen fertiggestellt werden können, ohne zuvor aufladen zu müssen.

Ein weiterer Aspekt der Erfindung ist ein System aus einer Küchenmaschine zum Zubereiten einer Speise in einem Speisenzubereitungsgefäß und einem batteriebetriebenen Hilfsgerät. Die Küchenmaschine umfasst ein Werkzeug zum Mischen oder Zerkleinern der Speise in dem Speisenzubereitungsgefäß und/oder ein Heizelement zum Erhitzen der Speise in dem Speisenzubereitungsgefäß. Die Küchenmaschine weist eine Empfangseinheit zum Empfangen eines Ladezustands des batteriebetriebenen Hilfsgeräts und eine Steuerungseinheit zur Verarbeitung des empfangenen Ladezustands auf. Insbesondere ist die Küchenmaschine dazu eingerichtet, eine Zustandsinformation bezüglich einer Speisenzubereitung von dem batteriebetriebenen Hilfsgerät zu empfangen und für einen Speisenzubereitungsvorgang zu nutzen. Alle Merkmale, Ausführungsformen und Wirkungen der eingangs beschriebenen Küchenmaschine gelten entsprechend auch für das System.

In einer Ausgestaltung des Systems ist das batteriebetriebene Hilfsgerät ein Thermometer. Insbesondere ist das Thermometer drahtlos mit der Küchenmaschine verbindbar. Dazu kann eine Funkverbindung wie beispielsweise Bluetooth genutzt werden.

In einer Ausgestaltung umfasst das System eine Ladestation zum Laden des Hilfsgeräts. Insbesondere umfasst die Ladestation eine Empfangseinheit zum Empfangen von Befehlen und eine mit der Empfangseinheit verbundene Steuerungseinrichtung zum Steuern eines Ladevorgangs des Hilfsgeräts. Die genannten Befehle können von einer Sendeeinheit der Küchenmaschine versendete Befehle zum Initiieren eines Ladens oder eines Schnelllademodus des Hilfsgeräts sein. Ein weiterer Aspekt der Erfindung ist ein Verfahren zum Betreiben einer Küchenmaschine. Die Küchenmaschine umfasst ein Werkzeug zum Mischen oder Zerkleinern der Speise in dem Speisenzubereitungsgefäß und/oder ein Heizelement zum Erhitzen der Speise in dem Speisenzubereitungsgefäß. Mittels einer Empfangseinheit der Küchenmaschine wird ein Ladezustand eines batteriebetriebenen Hilfsgeräts empfangen. Mittels einer Steuerungseinheit der Küchenmaschine wird der empfangene Ladezustand verarbeitet. Insbesondere ist die Küchenmaschine dazu eingerichtet, eine Zustandsinformation bezüglich einer Speisenzubereitung von dem batteriebetriebenen Hilfsgerät zu empfangen und für einen Speisenzubereitungsvorgang zu nutzen.

Ein weiterer Aspekt der Erfindung ist ein Computerprogrammprodukt. Dieses umfasst Befehle, die bei einer Ausführung eines Programms des Computerprogrammprodukts durch ein Steuergerät zur Steuerung einer Küchenmaschine diesen veranlassen, die Schritte des Verfahrens nach dem vorhergehenden Anspruch auszuführen.

Alle Merkmale, Ausführungsformen und Wirkungen der eingangs beschriebenen Küchenmaschine sowie des Systems gelten entsprechend auch für das Verfahren sowie das Computerprogrammprodukt.

Das Computerprogrammprodukt wird durch ein Steuergerät zur Steuerung einer Küchenmaschine ausgeführt. Ein Steuerungsgerät ist eine bevorzugt digitale Einrichtung zur Steuerung. Das Steuerungsgerät kann eine von der Küchenmaschine umfasste Steuerungseinheit gemäß den vorherigen Aspekten der Erfindung sein. Das Steuerungsgerät kann aber auch vom Hilfsgerät umfasst oder separat sein. Beispielsweise kann als Steuerungsgerät ein tragbares Gerät wie beispielsweise ein Smartphone genutzt werden. Es ist ausreichend, wenn das Steuerungsgerät derart in datentechnischer Verbindung mit dem Hilfsgerät steht oder bringbar ist, dass es den Ladezustand und ggf. die Zustandsinformation vom Hilfsgerät empfangen kann.

Ein weiterer Aspekt der Erfindung ist eine Küchenmaschine mit zumindest einer Funktionskomponente zum Zubereiten einer Speise in einem Speisenzubereitungsgefäß. Die Küchenmaschine ist dazu eingerichtet, eine Information bezüglich einer Speisenzubereitung, insbesondere eine gemessene Temperatur, von einem Hilfsgerät, nämlich einem externen Thermometer, zu empfangen. Die Funktionskomponente ist insbesondere ein Werkzeug zum Mischen und/oder Zerkleinern einer Speise in dem Speisenzubereitungsgefäß und/oder ein Heizelement zum Erhitzen der Speise in dem Speisenzubereitungsgefäß. Die Küchenmaschine kann eine Empfangseinheit zum Empfangen eines Ladezustands einer Batterie des Hilfsgeräts umfassen und insbesondere dazu eingerichtet sein, unter Berücksichtigung des empfangenen Ladezustands eine Information zur Fortführung eines Speisenzubereitungsvorgangs zu ermitteln. Alle Merkmale, Ausführungsformen und Wirkungen der eingangs beschriebenen Küchenmaschine gelten entsprechend auch für diesen Aspekt der Erfindung.

Ein weiterer Aspekt der Erfindung ist ein System aus einer Küchenmaschine und einem Hilfsgerät, nämlich einem externen Thermometer. Die Küchenmaschine umfasst zumindest eine Funktionskomponente zum Zubereiten einer Speise in einem Speisenzubereitungsgefäß. Die Küchenmaschine ist dazu eingerichtet, eine Information bezüglich einer Speisenzubereitung, insbesondere eine gemessene Temperatur, von dem Hilfsgerät zu empfangen. Die Funktionskomponente ist insbesondere ein Werkzeug zum Mischen und/oder Zerkleinern einer Speise in dem Speisenzubereitungsgefäß und/oder ein Heizelement zum Erhitzen der Speise in dem Speisenzubereitungsgefäß. Die Küchenmaschine kann eine Empfangseinheit zum Empfangen eines Ladezustands einer Batterie des Hilfsgeräts umfassen und insbesondere dazu eingerichtet sein, unter Berücksichtigung des empfangenen Ladezustands eine Information zur Fortführung eines Speisenzubereitungsvorgangs zu ermitteln. Alle Merkmale, Ausführungsformen und Wirkungen der eingangs beschriebenen Küchenmaschine gelten entsprechend auch für diesen Aspekt der Erfindung.

Nachfolgend werden Ausführungsbeispiele der Erfindung auch anhand einer Figur näher erläutert. Merkmale des Ausführungsbeispiels können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigt:

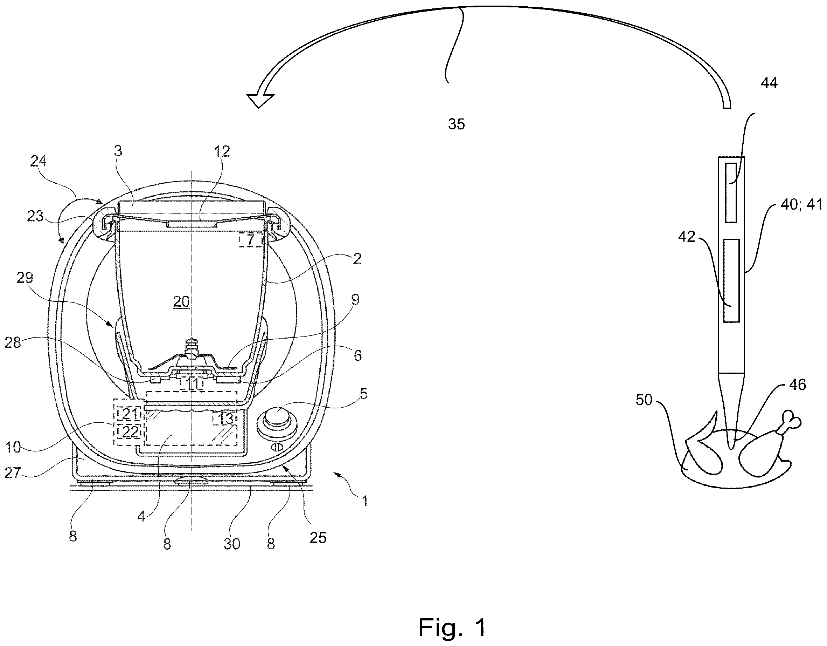

- Figur 1:: eine schematische Darstellung einer erfindungsgemäßen Küchenmaschine als Teil eines erfindungsgemäßen Systems mit einem Teilschnitt durch das Speisenzubereitungsgefäß.

Die Figur 1 zeigt eine Küchenmaschine 1 zum Durchführen eines Speisenzubereitungsvorgangs in einem Speisenzubereitungsgefäß 2. Ein Heizelement 6 kann zum Erhitzen der Speise 20 vorhanden sein. Zum Zerkleinern und/oder Mischen der Speise 20 kann ein drehbares Werkzeug 9 eingesetzt sein, das über eine nicht gezeigte Welle insbesondere durch eine Öffnung im Boden des Speisenzubereitungsgefäßes 2 mit einem Antrieb 11 gekoppelt ist. Ein Gehäuse 27 der Küchenmaschine umschließt den Antrieb 11 und stellt eine Aufnahme 29 für das Speisenzubereitungsgefäß 2 bereit. Die Küchenmaschine 1 hat eine Steuerungseinheit 10 zum Ansteuern der Funktionskomponenten wie Heizelement 6 oder Werkzeug 9 bzw. Antrieb 11, insbesondere basierend auf Rezeptschritten eines Rezepts. Messsensoren zum Erfassen eines Betriebszustands wie z. B. ein Temperatursensor 28 können vorhanden sein. Die Steuerungseinheit 10 kann einen Prozessor 21 und einen Speicher 22 aufweisen. Gewichtssensoren 8 können in den Standfüßen der Küchenmaschine 1, durch die das Gehäuse 27 auf einem Untergrund 30 steht, angeordnet sein. Ein Kontaktsensor 7 kann am Speisenzubereitungsgefäß 2 oder Deckel 3 angeordnet sein.

Ein Deckel 3 kann zum Schließen des Speisenzubereitungsgefäßes 2 vorgesehen sein. Dieser kann eine Verriegelungseinrichtung 23 aufweisen. Durch eine Schwenkbewegung 24 kann zwischen einem verriegelten und entriegelten Zustand gewechselt werden. Der Deckel 3 kann eine Deckelöffnung 12 enthalten, um Zutaten bzw. Speisen in das durch den Deckel 3 überwiegend abgedeckte Speisenzubereitungsgefäß 2 zu geben.

Über eine Benutzerschnittstelle 24, die insbesondere ein Touchscreen-Display 4 und/oder einen Knopf 5 umfassen, kann der Benutzer Informationen und Anweisungen von der Steuerungseinheit 10 erhalten und Eingaben für die Steuerungseinheit 10 tätigen. Die Benutzerschnittstelle 24 dient somit als Eingabeeinheit sowie als Ausgabeeinheit. Vorzugsweise hat die Steuerungseinheit 10 Zugriff auf Rezepte mit mehreren Rezeptschritten, die mithilfe der Benutzerschnittstelle 24 durch den Benutzer und die Küchenmaschine 1 zum Zubereiten einer Speise 20 umgesetzt werden können. Zu diesem Zweck ist die Küchenmaschine 1 dazu eingerichtet, auf der Basis der Rezeptschritte des Rezepts mittels der Benutzerschnittstelle 24 Informationen für einen Benutzer auszugeben. Die Steuerungseinheit 10 sorgt auf Basis eines oder mehrerer Betriebsparameter dafür, dass eine Speise 20 in dem Speisenzubereitungsgefäß 2 in gewünschter Weise erhitzt, zerkleinert und/oder gemischt wird. Auf diese Weise kann der Speisenzubereitungsvorgang gesteuert und/oder überwacht werden.

Auf der rechten Seite ist schematisch ein Hilfsgerät 40, nämlich ein drahtloses Thermometer 41 dargestellt. Das Thermometer 41 dient der Überwachung der Temperatur im Inneren einer zuzubereitenden Speise 50, die hier exemplarisch als Grillhähnchen dargestellt ist. Das Thermometer 41 so ausgestaltet, dass es mit seiner Spitze 46 im Inneren des Hähnchens angeordnet ist und während des Grillens des Hähnchens die innere Fleischtemperatur Inneren überwacht. Das Thermometer 41 umfasst weiterhin (nicht dargestellt) einen im Bereich der Spitze 46 angeordneten Temperatursensor sowie einen Wandler, mit dem in Abhängigkeit von der gefühlten Temperatur ein elektrisches Signal erzeugt wird.

Das Thermometer 41 umfasst eine Batterie 42 zur Energieversorgung der elektrischen und/oder elektronischen Komponenten. Das Thermometer 41 umfasst eine Sendeeinheit 44, zum Senden von Informationen per Funk. Mit der Sendeeinheit 44 werden Signale betreffend eine Zustandsinformation bezüglich einer Speisenzubereitung gesendet, nämlich Information bezüglich der gemessenen Temperatur. Mit der Sendeeinheit 44 werden weiterhin Informationen bezüglich des Ladezustands der Batterie 42 gesendet. Die Sendeeinheit 44 kann beispielsweise zum Senden von Signalen mittels Bluetooth eingerichtet sein.

Ein zweiter Temperatursensor kann in der oberen Hälfte des Thermometers vorhanden sein, so zum Beispiel zwischen der in der Figur 1 gezeigten Batterie 42 und der in der Figur 1 gezeigten Sendeeinheit 44.

Die Batterie 42 kann wie in der Figur 1 gezeigt in der Mitte des Thermometers 41 vorhanden sein. Die Batterie 42 kann aber auch vorteilhaft bei der Spitze 46 des Thermometers 41 vorhanden sein. Wird die Spitze 46, also das spitze Ende des Thermometers 41, in eine Speise gesteckt, so ist dadurch dann die Batterie 42 vor einer übermäßig großen Hitze geschützt.

Eine datenmäßige Verbindung 35 zur Übermittlung dieser Informationen vom Hilfsgerät 40 zur Küchenmaschine 1 ist schematisch mit einem Pfeil dargestellt. Die Küchenmaschine 1 weist eine (nicht dargestellte) Empfangseinheit auf, die dazu eingerichtet ist, die mittels der Verbindung 35 übermittelten Informationen bezüglich der gemessenen Temperatur sowie bezüglich des Ladezustands der Batterie 44 des Hilfsgeräts 40 zu empfangen.

Die Küchenmaschine 1 ist dazu eingerichtet, die Zustandsinformation sowie den Ladezustand des batteriebetriebenen Hilfsgeräts 40 zu empfangen. Die Küchenmaschine 1 ist ferner dazu eingerichtet, mittels der Steuerungseinheit 10 die empfangenen Informationen bezüglich des Ladezustands zu verarbeiten. Mittels der Steuerungseinheit 10 kann beispielsweise eine verbleibende Nutzungsdauer des Thermometers 41 ermittelt werden und/oder ermittelt werden, ob das Rezept mit dem derzeitigen Ladezustand des Thermometers 41 vollständig abgearbeitet werden kann. Falls dies nicht der Fall ist oder falls eine vollständige Abarbeitung des Rezepts nicht gewährleistet werden kann, kann dem Benutzer mittels der Benutzerschnittstelle 24 eine entsprechende Information ausgegeben werden. Auch können in diesem Fall Startzeiten zukünftiger Prozesse, beispielsweise folgender Rezeptschritte, angepasst werden. Insbesondere können die Startzeiten verschoben werden, sodass bis zum Start des jeweiligen Prozesses die Batterie 42 ausreichend geladen werden kann, um eine vollständige Abarbeitung des Rezepts zu gewährleisten.

Vor oder zu Beginn eines Speisenzubereitungsvorgangs kann mittels der Benutzerschnittstelle 24 angezeigt werden, welche Geräte benötigt werden, beispielsweise das Hilfsgerät 40. Sobald der Ladezustand empfangen wurde, kann die verbleibende Nutzungsdauer angezeigt werden. Wird vom Benutzer ein Rezept ausgewählt, kann angezeigt werden, ob das Rezept mit dem Ladezustand des Hilfsgeräts 40 vollständig abgearbeitet werden kann. Wenn nicht, kann angezeigt werden, wie lange das Hilfsgerät zunächst geladen werden muss, damit anschließend das Rezept zubereitet werden kann. Ebenso können alternative oder veränderte Rezepte angezeigt bzw. vorgeschlagen werden.

## Patentansprüche

1. Küchenmaschine (1) zum Zubereiten einer Speise (20, 50) in einem Speisenzubereitungsgefäß (2) mit einem Werkzeug (9) zum Mischen oder Zerkleinern der Speise (20, 50) in dem Speisenzubereitungsgefäß (2) und/oder einem Heizelement (6) zum Erhitzen der Speise (20, 50) in dem Speisenzubereitungsgefäß (2), wobei die Küchenmaschine (1) dazu eingerichtet ist, eine Zustandsinformation bezüglich einer Speisenzubereitung von einem batteriebetriebenen Hilfsgerät (40) zu empfangen und für einen Speisenzubereitungsvorgang zu nutzen, **dadurch gekennzeichnet, dass** die Küchenmaschine (1) eine Empfangseinheit eingerichtet zum Empfangen eines Ladezustands des batteriebetriebenen Hilfsgeräts (40) und eine Steuerungseinheit (10) eingerichtet zur Verarbeitung des empfangenen Ladezustands aufweist.

2. Küchenmaschine (1) nach dem vorhergehenden Anspruch, **dadurch gekennzeichnet, dass** die Steuerungseinheit (10) dazu eingerichtet ist, unter Berücksichtigung des empfangenen Ladezustands eine verbleibende Nutzungsdauer des Hilfsgeräts (40) zu ermitteln,
wobei die Küchenmaschine (1) insbesondere dazu eingerichtet ist, die verbleibende Nutzungsdauer an einen Benutzer auszugeben.

3. Küchenmaschine (1) nach einem der vorhergehenden Ansprüche, **dadurch gekennzeichnet, dass** die Küchenmaschine (1) dazu eingerichtet ist, auf der Basis von Rezeptschritten eines Rezepts zumindest einen Betriebsparameter des Werkzeugs (9) oder des Heizelements (6) einzustellen und/oder auf der Basis von Rezeptschritten eines Rezepts zumindest eine Information für einen Benutzer auszugeben.

4. Küchenmaschine (1) nach dem vorhergehenden Anspruch, **dadurch gekennzeichnet, dass** die Steuerungseinheit (10) dazu eingerichtet ist zu ermitteln, ob das Rezept mit dem Ladezustand des Hilfsgeräts (40) vollständig abgearbeitet werden kann,
wobei die Küchenmaschine (1) insbesondere dazu eingerichtet ist, eine entsprechende Information an einen Benutzer auszugeben.

5. Küchenmaschine (1) nach dem vorhergehenden Anspruch, **dadurch gekennzeichnet, dass** die Steuerungseinheit (10) dazu eingerichtet ist, zur Ermittlung, ob das Rezept mit dem Ladezustand des Hilfsgeräts (40) vollständig abgearbeitet werden kann,
- eine verbleibende Nutzungsdauer des Hilfsgeräts (40) unter Berücksichtigung des empfangenen Ladezustands zu ermitteln;
- eine erwartete Nutzungsdauer des Hilfsgeräts (40) unter Berücksichtigung des Rezepts zu ermitteln; und/oder
- eine verbleibende Nutzungsdauer des Hilfsgeräts (40) mit einer erwarteten Nutzungsdauer des Hilfsgeräts (40) zu vergleichen.

6. Küchenmaschine (1) nach einem der zwei vorhergehenden Ansprüche, **dadurch gekennzeichnet, dass** die Küchenmaschine (1) dazu eingerichtet ist, eine Information für einen Benutzer auszugeben, wenn eine vollständige Abarbeitung des Rezepts mit dem Ladezustand des Hilfsgeräts (40) nicht gewährleistet werden kann, und/oder
dass die Küchenmaschine (1) dazu eingerichtet ist, ein verändertes oder alternatives Rezept vorzuschlagen, wenn eine vollständige Abarbeitung des Rezepts mit dem Ladezustand des Hilfsgeräts (40) nicht gewährleistet werden kann

7. Küchenmaschine (1) nach einem der drei vorhergehenden Ansprüche, **dadurch gekennzeichnet, dass** die Küchenmaschine (1) dazu eingerichtet ist, eine Startzeit eines zukünftigen Prozesses zur Zubereitung einer Speise (20, 50) zu verändern, wenn ermittelt wird, dass eine vollständige Abarbeitung des Rezepts mit dem Ladezustand des Hilfsgeräts (40) nicht gewährleistet werden kann,
wobei die Küchenmaschine (1) insbesondere dazu eingerichtet ist, eine Zeitdauer zu ermitteln, die benötigt wird, um den Ladezustand des Hilfsgeräts (40) so zu erhöhen, dass eine vollständige Abarbeitung des Rezepts gewährleistet werden kann, und die ermittelte Zeitdauer zur Veränderung der Startzeit des zukünftigen Prozesses zu nutzen.

8. Küchenmaschine (1) nach einem der vier vorhergehenden Ansprüche, **dadurch gekennzeichnet, dass** die Küchenmaschine (1) dazu eingerichtet ist, einen Schnellademodus des Hilfsgeräts (40) zu initiieren, wenn ermittelt wird, dass eine vollständige Abarbeitung des Rezepts mit dem Ladezustand des Hilfsgeräts (40) nicht gewährleistet werden kann,
wobei die Küchenmaschine (1) insbesondere dazu eingerichtet ist, eine Zeitdauer zu ermitteln, die benötigt wird, um den Ladezustand des Hilfsgeräts (40) so zu erhöhen, dass eine vollständige Abarbeitung des Rezepts gewährleistet werden kann.

9. Küchenmaschine (1) nach einem der sechs vorhergehenden Ansprüche, **dadurch gekennzeichnet, dass** die Küchenmaschine (1) dazu eingerichtet ist, eine Abarbeitung von Rezeptschritten auf der Grundlage des Rezepts und/oder der empfangenen Information zu beeinflussen.

10. Küchenmaschine (1) nach einem der vorhergehenden Ansprüche, **dadurch gekennzeichnet, dass** die Küchenmaschine (1) dazu eingerichtet ist, einen Betrieb oder ein Laden des Hilfsgeräts (40) auf der Grundlage des Rezepts und/oder der empfangenen Information zu beeinflussen.

11. Küchenmaschine (1) nach einem der vorhergehenden Ansprüche, **dadurch gekennzeichnet, dass** die Küchenmaschine (1) dazu eingerichtet ist, eine Information darüber auszugeben, wie oft ein bestimmtes Rezept mit dem empfangenen Ladezustand noch ausgeführt werden kann.

12. System aus einer Küchenmaschine (1) zum Zubereiten einer Speise (20, 50) in einem Speisenzubereitungsgefäß (2) und einem batteriebetriebenen Hilfsgerät (40), wobei die Küchenmaschine (1) ein Werkzeug (9) zum Mischen oder Zerkleinern der Speise (20, 50) in dem Speisenzubereitungsgefäß (2) und/oder ein Heizelement (6) zum Erhitzen der Speise (20, 50) in dem Speisenzubereitungsgefäß (2) umfasst, **dadurch gekennzeichnet, dass** die Küchenmaschine (1) eine Empfangseinheit eingerichtet zum Empfangen eines Ladezustands des batteriebetriebenen Hilfsgeräts (40) und eine Steuerungseinheit (10) eingerichtet zur Verarbeitung des empfangenen Ladezustands aufweist.

13. System nach dem vorherigen Anspruch, **dadurch gekennzeichnet, dass** das batteriebetriebene Hilfsgerät (40) ein Thermometer (41) ist,
wobei das Thermometer (41) insbesondere drahtlos mit der Küchenmaschine (1) verbindbar ist.

14. Verfahren zum Betreiben einer Küchenmaschine (1), wobei die Küchenmaschine (1) ein Werkzeug (9) zum Mischen oder Zerkleinern der Speise (20, 50) in dem Speisenzubereitungsgefäß (2) und/oder ein Heizelement (6) zum Erhitzen der Speise (20, 50) in dem Speisenzubereitungsgefäß (2) umfasst, wobei mittels einer Empfangseinheit der Küchenmaschine (1) ein Ladezustand eines batteriebetriebenen Hilfsgeräts (40) empfangen wird und mittels einer Steuerungseinheit (10) der Küchenmaschine (1) der empfangene Ladezustand verarbeitet wird.

15. Computerprogrammprodukt, umfassend Befehle, die bei einer Ausführung eines Programms des Computerprogrammprodukts durch ein Steuerungsgerät zur Steuerung einer Küchenmaschine (1), diese veranlassen, die Schritte des Verfahrens nach dem vorhergehenden Anspruch auszuführen.

## Claims

1. Kitchen appliance (1) for preparing food (20, 50) in a food preparation vessel (2) with a tool (9) for mixing or comminuting the food (20, 50) in the food preparation vessel (2) and/or a heating element (6) for heating the food (20, 50) in the food preparation vessel (2), wherein the kitchen appliance (1) is configured to receive a status information regarding a food preparation from a battery-operated auxiliary device (40) and to use it for a food preparation process, **characterized in that** the kitchen appliance (1) comprises a receiving unit configured for receiving a charging status of the battery-operated auxiliary device (40) and a control unit (10) configured for processing the received charging status.

2. Kitchen appliance (1) according to the preceding claim, **characterized in that** the control unit (10) is configured to determine a remaining period of use of the auxiliary device (40) taking into account the received charging status,
wherein the kitchen appliance (1) is in particular configured to output the remaining period of use to a user.

3. Kitchen appliance (1) according to one of the preceding claims, **characterized in that** the kitchen appliance (1) is configured to set at least one operating parameter of the tool (9) or of the heating element (6) on the basis of recipe steps of a recipe and/or to output at least one information for a user on the basis of recipe steps of a recipe.

4. Kitchen appliance (1) according to the preceding claim, **characterized in that** the control unit (10) is configured to determine whether the recipe can be completely processed with the charging status of the auxiliary device (40),
wherein the kitchen appliance (1) is in particular configured to output a corresponding information to a user.

5. Kitchen appliance (1) according to the preceding claim, **characterized in that** the control unit (10) is configured, for determining whether the recipe can be completely processed with the charging status of the auxiliary device (40), to
- determine a remaining period of use of the auxiliary device (40), taking into account the received charging status;
- determine an expected period of use of the auxiliary device (40) taking into account the recipe; and/or
- compare a remaining period of use of the auxiliary device (40) with an expected period of use of the auxiliary device (40).

6. Kitchen appliance (1) according to one of the two preceding claims, **characterized in that** the kitchen appliance (1) is configured to output an information for a user if complete processing of the recipe cannot be ensured with the charging status of the auxiliary device (40), and/or
**in that** the kitchen appliance (1) is configured to suggest a modified or alternative recipe if complete processing of the recipe cannot be ensured with the charging status of the auxiliary device (40).

7. Kitchen appliance (1) according to one of the three preceding claims, **characterized in that** the kitchen appliance (1) is configured to change a start time of a future process for preparing food (20, 50) when it is determined that complete processing of the recipe cannot be ensured with the charging status of the auxiliary device (40),
wherein the kitchen appliance (1) is in particular configured to determine a period of time required to increase the charging status of the auxiliary device (40) such that complete processing of the recipe can be ensured, and to use the determined period of time to change the starting time of the future process.

8. Kitchen appliance (1) according to one of the four preceding claims, **characterized in that** the kitchen appliance (1) is configured to initiate a fast-charging mode of the auxiliary device (40) when it is determined that complete processing of the recipe cannot be ensured with the charging status of the auxiliary device (40),
wherein the kitchen appliance (1) is in particular configured to determine a period of time required to increase the charging status of the auxiliary device (40) such that complete processing of the recipe can be ensured.

9. Kitchen appliance (1) according to one of the six preceding claims, **characterized in that** the kitchen appliance (1) is configured to influence a processing of recipe steps on the basis of the recipe and/or the received information.

10. Kitchen appliance (1) according to one of the preceding claims, **characterized in that** the kitchen appliance (1) is configured to influence an operation or a charging of the auxiliary device (40) based on the recipe and/or the received information.

11. Kitchen appliance (1) according to one of the preceding claims, **characterized in that** the kitchen appliance (1) is configured to output information on how many times a particular recipe can still be executed with the received charging status.

12. System comprising a kitchen appliance (1) for preparing food (20, 50) in a food preparation vessel (2) and a battery-operated auxiliary device (40), wherein the kitchen appliance (1) comprises a tool (9) for mixing or comminuting the food (20, 50) in the food preparation vessel (2) and/or a heating element (6) for heating the food (20, 50) in the food preparation vessel (2), **characterized in that** the kitchen appliance (1) comprises a receiving unit configured for receiving a charging status of the battery-operated auxiliary device (40) and a control unit (10) configured for processing the received charging status.

13. System according to the preceding claim, **characterized in that** the battery-operated auxiliary device (40) is a thermometer (41),
wherein the thermometer (41) is in particular wirelessly connectable to the kitchen appliance (1).

14. Method for operating a kitchen appliance (1), wherein the kitchen appliance (1) comprises a tool (9) for mixing or comminuting the food (20, 50) in the food preparation vessel (2) and/or a heating element (6) for heating the food (20, 50) in the food preparation vessel (2), wherein a charging status of a battery-operated auxiliary device (40) is received by means of a receiving unit of the kitchen appliance (1) and the received charging status is processed by means of a control unit (10) of the kitchen appliance (1).

15. Computer program product comprising instructions which, when a program of the computer program product is executed by a control device for controlling a kitchen appliance (1), cause the control device to execute the steps of the method according to the preceding claim.

## Revendications

1. Robot de cuisine (1) pour préparer un aliment (20, 50) dans un récipient de préparation d'aliments (2) avec un outil (9) pour mélanger ou broyer l'aliment (20, 50) dans le récipient de préparation d'aliments (2) et/ou un élément de chauffage (6) pour chauffer l'aliment (20, 50) dans le récipient de préparation d'aliments (2), dans lequel le robot de cuisine (1) est adapté pour recevoir une information d'état concernant une préparation d'aliments d'un appareil auxiliaire (40) fonctionnant sur batterie et l'utiliser pour un processus de préparation d'aliments, **caractérisé en ce que** le robot de cuisine (1) présente une unité de réception adaptée pour recevoir un état de charge de l'appareil auxiliaire (40) fonctionnant sur batterie et une unité de commande (10) adaptée pour traiter l'état de charge reçu.

2. Robot de cuisine (1) selon la revendication précédente, **caractérisé en ce que** l'unité de commande (10) est adaptée pour déterminer une durée d'utilisation restante de l'appareil auxiliaire (40) en tenant compte de l'état de charge reçu,
dans lequel le robot de cuisine (1) est notamment adapté pour délivrer la durée d'utilisation restante à un utilisateur.

3. Robot de cuisine (1) selon l'une quelconque des revendications précédentes, **caractérisé en ce que** le robot de cuisine (1) est adapté pour régler au moins un paramètre de fonctionnement de l'outil (9) ou de l'élément chauffant (6) sur la base d'étapes de recette d'une recette et/ou pour délivrer au moins une information pour un utilisateur sur la base d'étapes de recette d'une recette.

4. Robot de cuisine (1) selon la revendication précédente, **caractérisé en ce que** l'unité de commande (10) est adaptée pour déterminer si la recette peut être entièrement exécutée avec l'état de charge de l'appareil auxiliaire (40),
dans lequel le robot de cuisine (1) est notamment adapté pour délivrer une information correspondante à un utilisateur.

5. Robot de cuisine (1) selon la revendication précédente, **caractérisé en ce que** l'unité de commande (10) est adaptée pour déterminer si la recette peut être entièrement exécutée avec l'état de charge de l'appareil auxiliaire (40),
- de déterminer une durée d'utilisation restante de l'appareil auxiliaire (40) en tenant compte de l'état de charge reçu ;
- de déterminer une durée d'utilisation attendue de l'appareil auxiliaire (40) en tenant compte de la recette ; et/ou
- de comparer une durée d'utilisation restante de l'appareil auxiliaire (40) avec une durée d'utilisation attendue de l'appareil auxiliaire (40).

6. Robot de cuisine (1) selon l'une des deux revendications précédentes, **caractérisé en ce que** le robot de cuisine (1) est adapté pour délivrer une information à un utilisateur lorsqu'une exécution complète de la recette ne peut pas être garantie avec l'état de charge de l'appareil auxiliaire (40), et/ou
**en ce que** le robot de cuisine (1) est adapté pour proposer une recette modifiée ou alternative lorsqu'une exécution complète de la recette ne peut pas être garantie avec l'état de charge de l'appareil auxiliaire (40).

7. Robot de cuisine (1) selon l'une des trois revendications précédentes, **caractérisé en ce que** le robot de cuisine (1) est adapté pour modifier un temps de démarrage d'un futur processus de préparation d'un aliment (20, 50) lorsqu'il est déterminé qu'une exécution complète de la recette ne peut pas être garantie avec l'état de charge de l'appareil auxiliaire (40),
dans lequel le robot de cuisine (1) est notamment adapté pour déterminer une durée nécessaire pour augmenter l'état de charge de l'appareil auxiliaire (40) de telle sorte qu'une exécution complète de la recette puisse être garantie, et pour utiliser la durée déterminée pour modifier le temps de démarrage du processus futur.

8. Robot de cuisine (1) selon l'une des quatre revendications précédentes, **caractérisé en ce que** le robot de cuisine (1) est adapté pour initier un mode de charge rapide de l'appareil auxiliaire (40) lorsqu'il est déterminé qu'une exécution complète de la recette ne peut pas être garantie avec l'état de charge de l'appareil auxiliaire (40),
dans lequel le robot de cuisine (1) est notamment adapté pour déterminer une durée nécessaire pour augmenter l'état de charge de l'appareil auxiliaire (40) de manière à pouvoir garantir une exécution complète de la recette.

9. Robot de cuisine (1) selon l'une des six revendications précédentes, **caractérisé en ce que** le robot de cuisine (1) est adapté pour influencer une exécution des étapes de recette sur la base de la recette et/ou des informations reçues.

10. Robot de cuisine (1) selon l'une quelconque des revendications précédentes, **caractérisé en ce que** le robot de cuisine (1) est adapté pour influencer un fonctionnement ou un chargement de l'appareil auxiliaire (40) sur la base de la recette et/ou des informations reçues.

11. Robot de cuisine (1) selon l'une des revendications précédentes, **caractérisé en ce que** le robot de cuisine (1) est adapté pour délivrer une information sur le nombre de fois qu'une recette donnée peut encore être exécutée avec l'état de charge reçu.

12. Système composé d'un robot de cuisine (1) pour préparer un aliment (20, 50) dans un récipient de préparation d'aliments (2) et d'un appareil auxiliaire (40) fonctionnant sur batterie, dans lequel le robot de cuisine (1) comprend un outil (9) pour mélanger ou broyer l'aliment (20, 50) dans le récipient de préparation d'aliments (2) et/ou un élément de chauffage (6) pour chauffer l'aliment (20, 50), 50) dans le récipient de préparation d'aliments (2), **caractérisé en ce que** le robot de cuisine (1) présente une unité de réception adaptée pour la réception d'un état de charge de l'appareil auxiliaire (40) fonctionnant sur batterie et une unité de commande (10) adaptée pour le traitement de l'état de charge reçu.

13. Système selon la revendication précédente, **caractérisé en ce que** l'appareil auxiliaire (40) fonctionnant sur batterie est un thermomètre (41),
dans lequel le thermomètre (41) est connectable, notamment sans fil, au robot de cuisine (1).

14. Procédé de fonctionnement d'un robot de cuisine (1), dans lequel le robot de cuisine (1) comprend un outil (9) pour mélanger ou broyer l'aliment (20, 50) dans le récipient de préparation d'aliments (2) et/ou un élément de chauffage (6) pour chauffer l'aliment (20, 50) dans le récipient de préparation d'aliments (2), dans lequel un état de charge d'un appareil auxiliaire (40) fonctionnant sur batterie est reçu moyennant une unité de réception du robot de cuisine (1) et l'état de charge reçu est traité moyennant une unité de commande (10) du robot de cuisine (1).

15. Produit de programme d'ordinateur comprenant des instructions qui, lors d'une exécution d'un programme du produit de programme d'ordinateur par un dispositif de commande pour commander un robot de cuisine (1), amènent ce dernier à exécuter les étapes du procédé selon la revendication précédente.
